(19) Europäisches Patentamt
European Patent Office
Office européen des brevets

(11) **EP 4 148 461 B1**

(12) **EUROPEAN PATENT SPECIFICATION**

(45) Date of publication and mention
of the grant of the patent:
**09.04.2025 Bulletin 2025/15**

(21) Application number: **22195062.9**

(22) Date of filing: **12.09.2022**

(51) International Patent Classification (IPC):
*G10K 9/12* *(2006.01)*        *G01S 7/521* *(2006.01)*
*H04R 1/44* *(2006.01)*        *H04R 17/00* *(2006.01)*

(52) Cooperative Patent Classification (CPC):
**G10K 9/121; G01S 7/521; H04R 1/44; H04R 17/00;**
G10K 2200/11

(54) **A STAVE, A FLEXTENSIONAL TRANSDUCER, AND A WATER BASED SONAR DEVICE**

PLATTENKÜHLER, FLEXTENSIONALER WANDLER UND SONARVORRICHTUNG AUF WASSERBASIS

DOUVE, TRANSDUCTEUR FLEXTENSIONNEL ET DISPOSITIF SONAR À BASE D'EAU

(84) Designated Contracting States:
**AL AT BE BG CH CY CZ DE DK EE ES FI FR GR HR HU IE IS IT LI LT LU LV MC MK MT NL NO PL PT RO RS SE SI SK SM TR**

(30) Priority: **14.09.2021 GB 202113120**

(43) Date of publication of application:
**15.03.2023 Bulletin 2023/11**

(73) Proprietor: **Thales Holdings UK Plc**
**Reading, Berkshire RG2 6GF (GB)**

(72) Inventors:
• **BOND, Andrew James**
**Reading, RG2 6GF (GB)**
• **CATT, Steven Robert**
**Reading, RG2 6GF (GB)**

(74) Representative: **Marks & Clerk LLP**
**15 Fetter Lane**
**London EC4A 1BW (GB)**

(56) References cited:
**US-A1- 2019 013 001    US-B2- 10 466 353**

• **SAHEBAN HAMID ET AL: "Hydrophones, fundamental features, design considerations, and various structures: A review", SENSORS AND ACTUATORS A: PHYSICAL, ELSEVIER BV, NL, vol. 329, 29 April 2021 (2021-04-29), XP086613266, ISSN: 0924-4247, [retrieved on 20210429], DOI: 10.1016/J.SNA.2021.112790**

## Description

## Technical Field

The subject-matter of the present disclosure relates to a flextensional transducer including a stave, and a water based sonar device including a flextensional transducer.

## Background

Flextensional transducers are used to produce a high power low frequency sound in a compact package for underwater use. For instance, they may be incorporated into water based sonar systems, e.g. a sonobuoy. However, current designs can be too large and heavy rendering them unsuitable.

The size of the device impacts the resonant frequency of the device. Reducing the size of the transducer will increase the resonant frequency of the device, for example. To produce a smaller device with a comparatively low resonant frequency, the stave material can be made less stiff either through choice of material or by increasing a degree of porosity in the stave structure by using a lattice.

The use of a lattice increases the amount of damping in the transducer stave design. This damping increase reduces the sound power level created by the device.

The aim of the subject-matter of the present disclosure is to improve on the prior art.

US10466353 describes a leaky-wave antenna for fluid environments including a waveguide cavity defined by a waveguide wall. The waveguide cavity is filled with a waveguide fluid. The waveguide walls are made of either an anisotropic material that utilize one of orthotropic stiffness of the anisotropic material to control mode conversion, a band gap material to approximate an acoustically rigid boundary, and a combination of the two materials.

Hamid Saheban et al, "Hydrophones, fundamental features, design considerations, and various structures: A review", Sensors and Actuators A: Physical, Volume 329, 2021, 112790, describes a review of hydrophones, their design considerations, physical aspects, and structures.

US2019013001 describes a flextensional transducer for underwater operation including a driving element and a stave. The stave is made from a material with elastic properties and has a porous structure.

## Summary

According to an aspect of the present disclosure, there is provided a flextensional transducer as recited in claim 1. The stave being made from an auxetic lattice results in radial deflection that is larger per unit of lengthwise deflection compared to a structure that is not auxetic. As a result, sensitivity of the transducer is increased. The increase in sensitivity occurs whether the transducer is used as a transmitter or a receiver.

The auxetic lattice may be an isotropic auxetic lattice. An isotropic lattice exhibits increased sensitivity in all directions.

The auxetic lattice may be an anisotropic auxetic lattice. An intended axis of movement of the stave in-use may be configured to have a Poisson's ratio having a highest magnitude compared to the other two axes. The stave will exhibit the highest sensitivity in the direction in which the axis of the lattice having the highest Poisson's ratio extends. In this way, employing an auxetic lattice provides a means to tune the sensitivity of the stave.

The auxetic lattice may be an orthotropic auxetic lattice.

The dimensions of the orthotropic auxetic lattice's structure may be different in each Cartesian axis.

The stave may have a non-uniform cross-section. Non-uniformity may improve the sensitivity of the stave in a particular direction.

The stave may have an elliptical cross-section.

The auxetic lattice may be constructed using one or more lattice types selected from a list including: S-shape hinges, re-entrant honeycomb, chiral truss, square matrix, triangular matrix, and bucklicrystals.

The stave may extend in a first direction and wherein a volume fraction of the stave may be graduated along the first direction. Graduating the volume fraction enables a reduction in fatigue at certain points of the stave.

Graduating the volume fraction enables a reduction in fatigue at certain points of the stave. This inventive concept is independent of the auxetic nature of the lattices referenced above. This is because the graduated porosity of the stave enables reduced fatigue at certain points of the stave for both auxetic and non-auxetic lattices.

The volume fraction may increase toward a centre of the stave, or the volume fraction may decrease toward a centre of the stave. The centre of a stave may exhibit more or less deflection than respective ends of the stave, depending upon the overall configuration and shape of the flextensional transducer.

The stave may be perforated.

The stave may be made by additive manufacturing.

The stave may be made by laser powder bed fusion.

The flextensional transducer may be for use as a sonar transmitter.

The flextensional transducer may be for use as a sonar receiver.

The flextensional transducer may be an inverted barrel-type transducer.

According to a further aspect of the present disclosure, there is provided a water based sonar device comprising the aforementioned flextensional transducer.

## Brief Description of the Figures

The subject-matter of the present disclosure is best understood with reference to the accompanying figures, in which:

- Figure 1 is a perspective view of a flextensional transducer according to an embodiment of the present disclosure;
- Figure 2 is a cross-sectional view of the flextensional transducer from Figure 1;
- Figures 3A-C show the behaviour of a flextensional transducer when the stave is made from a bulk material;
- Figures 4A-C show the behaviour of the flextensional transducer from Figure 1 where the stave is made from an auxetic material;
- Figure 5 shows an auxetic material for the stave of the flextensional transducer from Figure 1 in the form of an S-shaped hinge;
- Figure 6 shows a further auxetic material for the stave of the flextensional transducer from Figure 1 in the form of a chiral truss;
- Figures 7A and 7B show the behaviour of a further auxetic material for the stave of the flextensional transducer from Figure 1 in the form of a square matrix;
- Figures 8A and 8B show the behaviour of a further auxetic material for the stave of the flextensional transducer from Figure 1 in the form of a triangular matrix;
- Figures 9A and 9B show a further auxetic material for the stave of the flextensional transducer from Figure 1 in the form of Bucklicrystals; and
- Figure 10 shows seven classes of flextensional transducer to which the inventive concepts defined herein may be applied.

## Detailed Description

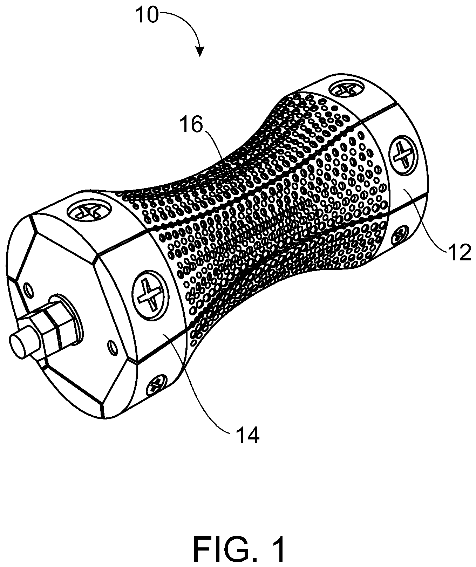

With reference to Figure 1, according to embodiments of the present disclosure, there is shown a flextensional transducer 10. The flextensional transducer 10 is suitable for use underwater. More specifically, the flextensional transducer 10 is suitable for use as part of a sonobuoy.

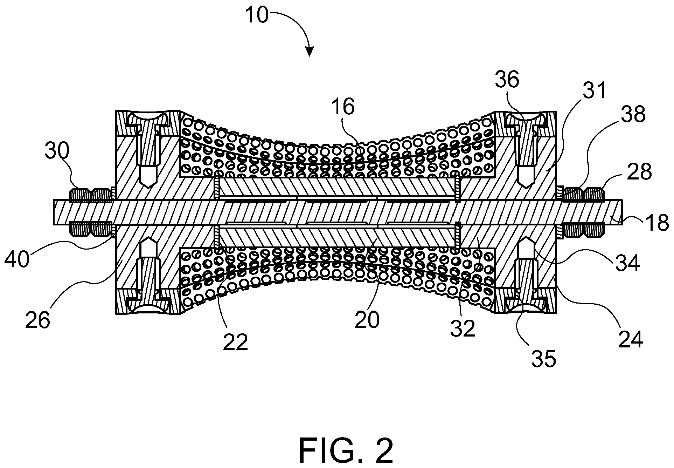

The flextensional transducer 10 is an inverted barrel type transducer. In other words, the flextensional transducer 10 has a first end 12 and a second end 14, which are both substantially cylindrical. The flextensional transducer 10 includes a stave 16 extending between the first end 12 and the second end 14. The stave 16 has a substantially concave cross section (see Figure 2). The concave cross section means that the stave 16 bends inwards towards a centre axis of the flextensional transducer 10 at a central portion of the stave 16.

With reference to Figure 2, the flextensional transducer 10 includes a centre bolt 18, a ceramic stack 20, electric insulators 22, a first end cap 24, a second end cap 26, a first end nut 28, a second end nut 30, and a rubber coating (not shown).

The centre bolt 18 is made from an elongate threaded cylinder made from a metallic material. The metallic material may include steel and may be prestressed. The centre bolt 18 forms the central structure to which the other parts are mounted.

The ceramic stack 20 is mounted to the bolt 18. The ceramic stack 20 may be substantially cylindrical and have a central bore. The ceramic stack includes a plurality of piezoelectric discs. The discs may be ring shaped in view of the central bore. The centre bolt 18 passes through the central bore of the ceramic stack 20.

Whilst not shown in the figures for brevity, the ceramic stack 20 includes electrical insulators. A electrical insulator may be provided between the ceramic stack 20 and the centre bolt 18. There is also an insulator 22 at each end of the ceramic stack 20 between the ceramic stack 20 and the first and second end caps 24, 26. Although not shown in the figures, there is an insulator between each set of adjacent ceramic discs. For instance, the number of ceramic discs is one less than the number of insulators 22.

Whilst not shown in the figures for brevity, the flextensional transducer 10 includes electrodes connecting the piezoelectric discs together, and a wire to connect the electrodes to outside the device for sensing the piezoelectric charge or for receiving the signal to charge the piezoelectric discs.

The first and second end caps 24, 26, are at either end of the ceramic stack 20. The first and second end caps 24, 26, each have a substantially T-shaped cross-section with a bore extending through them. The T-shaped cross-section is formed from a head 31 of the caps 24, 26, substantially in the shape of a hexagonal prism (see Figures 1 and 2), and an elongate shaft 32. The bore is dimensioned and configured to receive the centre bolt 18 therethrough. The head 31 includes a plurality of circumferentially arranged bores 34 including interior threads extending radially from a central axis. In the embodiment shown in Figure 1 there may be six bores spaced equally from one another, e.g. about 60 degrees separating each bore 34. In other embodiments, the number of bores may be more or less.

As shown in Figure 1, the stave 16 may be constructed from a plurality of stave segments. Each stave segment may be substantially the same as the other stave segments. In the embodiment shown in Figure 1, there may be six stave segments, though the number may be more or less. The stave segments include a bore 35 at each end. The stave segments are attached to the end caps 24, 26, using screws 36. The screws 36 are dimensioned and configured to pass through the bores 35 of the stave segments and threadingly engage the bores 34 of the end caps 24, 26 shown in Figure 2. The screws 36 may be made from a metallic material. The screws 36 are shown as cross-head type screws though in other embodiments they may be flat-heat type or another type of head. The ends of the stave segments may include a flat interior face to engage one of the faces of the hexagonal end caps 24, 26, and may have a substantially arc shaped exterior face. The exterior face may include a counter hole to counter-sink the screw 36 into the bores 34.

In the embodiment shown in Figures 1 and 2, the structure of the stave 16 is perforated between the first and second ends. In other words, the stave 16 may be perforated in the concave section and monolithic at the end sections. The holes of the perforated stave 16 may be substantially uniformly distributed.

The end caps 24, 26 may be secured to the centre bolt 18 by fastening the first and second end nuts 28, 30 to the centre bolt 18. O-rings 38, 40, may be provided between the first end cap 24 and the first end nut 28, and between the second end cap 26 and the second end nut 30.

A rubber coating (not shown) may be applied to the exterior of the assembled flextensional transducer 10 to improve water resistance.

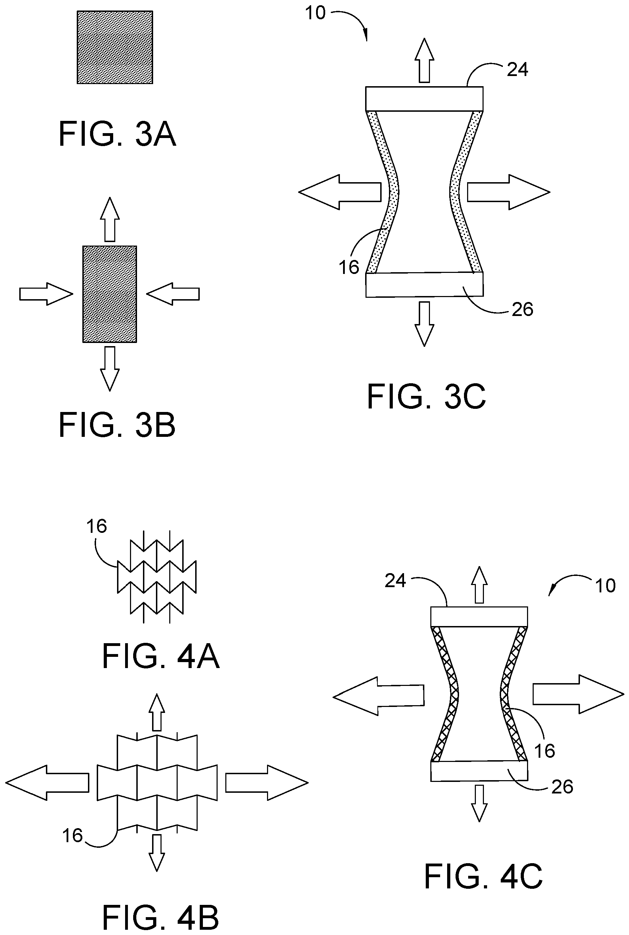

With reference to Figures 2 and 3C, when the flextensional transducer 10 is used as an active device, i.e. a transmitter, the ceramic stack receives an electrical signal through the wiring and electrodes. A charge is formed in each of the piezoelectric discs. The piezoelectric discs are configured to move in response to the charge by converting the electrical signal to kinetic energy. The movement of the discs causes a force to be exerted on the end caps 24, 26. In turn, the end caps 24, 26, move outwardly. The outward movement may be followed by inwards movement and the end caps may oscillate. The movement of the end caps 24, 26, induces movement into the stave 16. The movement of the stave 16 follows the movement of the end caps 24, 26. For instance, when the end caps 24, 26, move away from one another, the stave 16 are tensioned. The tension induced in the stave 16 causes the stave 16 to flex radially outwards. Conversely, when the end caps 24, 26, move towards one another, the stave 16 is compressed. The compression causes the stave 16 to flex radially inwards. The transducer may also be used as a passive device. In other words, the flextensional transducer 10 may be configured as a receiver. When used as a receiver, the flextensional transducer 10 may receive vibrations in the surrounding water and deflect the stave 16. When the stave deflects, the end caps may move apart and together in-sync with the outwards movement of the stave 16 (see Figure 3C). The movement of the end caps 24, 26, is converted to an electrical signal by the piezoelectric discs.

The movement pattern of the flextensional transducer results from its inverted barrel shape with the concave stave. In this way, the flextensional transducer may be understood as being an auxetic assembly. An auxetic is a structure exhibiting a negative Poisson's ratio.

With reference to Figures 3B and 3C, the material of the stave of a conventional transducer may be made from a substantially monolithic structure. In other words, the conventional stave may itself have a positive Poisson's ratio at bulk level. As can be seen from Figure 3A, the bulk stave at rest has certain dimensions for height and width. As can be seen from Figure 3B, the bulk stave material may have a larger height and a smaller width when experiencing a forcing in the height direction stretching the bulk material, as would be the case when the transducer is transmitting the signal.

Therefore, a conventional stave at bulk level may impair the sound power or the sensitivity of the device when used as either a transmitter or receiver.

With reference to Figures 4A and 4B, a stave 16 according to the present disclosure may itself be made from an auxetic material. The auxetic material may be an auxetic lattice, which at unit cell level exhibits auxetic behaviour. In this embodiment, the stave 16 may be made from a re-entrant honeycomb. The re-entrant honeycomb is configured to expand in a width ways direction in response to being expanded in a lengthways direction. As can be seen from Figure 4C, by making the stave 16 from an auxetic material, e.g. in the form of a re-entrant honeycomb, the amount of radial expansion of the stave 16 in response to separation of the end caps 24, 26, is larger than when the stave 16 is made from a non-auxetic material (e.g. the monolithic structure) shown in Figures 3A to C. This increase in radial deflection acts to amplify the sound power when transmitting sound. In this way, when the flextensional transducer 10 is used as a transmitter, the sound waves produced will exhibit increased amplitude. Conversely, when the flextensional transducer 10 is used as a receiver, the receiver will benefit from increased sensitivity.

The auxetic material of the stave 16 may be an isotropic auxetic material. In other words, the auxetic material may have substantially equivalent Poisson's ratios in each axis of a Cartesian co-ordinate system.

In other embodiments, the auxetic material of the stave 16 may be anisotropic. In other words, the auxetic material may have dissimilar Poisson's ratios in one axis of a Cartesian co-ordinate system compared to the other axes. The anisotropic auxetic material may be an orthotropic auxetic material having dissimilar Poisson's ratios in each axis of the Cartesian co-ordinate system. In such embodiments, it is possible to tune the auxetic properties of the material in a particular direction. In the case of a flextensional transducer 10, the Poisson's ratio may be configured to have highest magnitude in a direction in which the stave 16 extends radially. In this way, the sensitivity/power may be increased or even maximised. For instance, where the bulk material may have ratios of 1:1:1, an anisotropic lattice may have a ratio of 1:4:-0.28, for example.

Another reason to tune the response of the stave 16 using an anisotropic auxetic material is to change the resonant frequency. Changing the resonant frequency can be used for providing a frequency filter. For instance, the frequency filter may be configured as a band pass filter. The band pass filter may be configured to permit waves between pre-determined frequencies to be transmitted/received, but preventing others below and above the pre-determined frequencies by structuring the material to damp out those frequencies outside of the desired band.

In order to adjust the response in each axis, it is possible to change the geometry of the material cells. In addition, it may be possible to adjust the geometry of the flextensional transducer 10 to tune the response in a particular direction, e.g. by making the flextensional transducer 10 have a non-circular cross-section. For example, the flextensional transducer 10 may be configured to have an elliptical cross-section.

The auxetic material may include a lattice structure. The lattice structure can be understood as having a degree of porosity, where the pores are the voids between the lattice structure. The pores modify the effective Young's Modulus of the stave 16 by decreasing the volume fraction, i.e. decreasing the volume of solid material by increasing a void volume. The volume fraction is the volume of the solid material divided by the sum of the solid material volume and the void volume. The relationship between the degree of porosity may be seen the formula below

$$E = E_0 \left( \frac{p_c - p}{p_c} \right)^f \quad \text{for} \quad p \leq p_c$$

where E **is** the effective Young's Modulus in the presence of a porous structure, $E_0$ is the Young's Modulus of the stave 16 without holes, p is the degree of porosity (measured between zero and 1), $p_c$ is the degree of porosity at which the effective Young's Modulus E becomes zero (usually found to be approximately equal to 1), f is the parameter dependent on the grain morphology and pore geometry of the porous structure.

For example, in a situation where the f parameter is found to be equal to 1.2, and a volume of bulk steel is made 40% porous ($p = 0.4$), the effective Young's Modulus of that volume of porous bulk steel is reduced from an approximate Young's Modulus of 200GPa to 108GPa. This also has the effect of the overall effective density of the stave 16 being reduced from 7750kg/m$^3$ to 4650kg/m$^3$.

The degree of porosity can therefore be varied to adjust the effective Young's Modulus and overall effective density as required in order to achieve the target resonant frequency of the flextensional transducer 10 for a given size, shape, and material. This allows materials to be employed with properties that would not conventionally be appropriate for such devices, such as those that fall outside the normally acceptable areas shown on an Ashby material selection chart.

According to an embodiment of the present disclosure, the porosity of the stave 16 material can be varied along the stave 16. In this way, the stave 16 may be said to have graduated porosity. Graduating the porosity enables density changes locally at regions of the stave 16 that experience the largest displacement, in-use. Graduating the porosity is an inventive concept that is independent of the auxetic nature of the lattices described herein. This is because the graduated porosity of the stave will enable reduced fatigue at certain points of the stave for both auxetic and non-auxetic lattices. As an example, a non-auxetic lattice may be a lattice, e.g. a honeycomb, having a positive Poisson's ratio.

The graduated density may be configured such that the stave 16 exhibits a highest volume fraction toward a centre of the stave 16, where the displacement may be highest. Alternatively, the stave may exhibit a highest volume fraction toward the monolithic ends at a route of the concave section.

As described above, the stave 16 has two types of pores. Firstly, the stave 16 includes voids within the lattice of the stave 16. Secondly, the stave 16 includes perforation holes. The lattice voids and/or the perforation holes may be considered as empty space voids for the volume fraction calculation.

A rubber boot may be placed around the lattice to provide water proofing. Alternatively, to provide waterproofing, the lattice voids may be filled with a filler. The filler may be made from an elastic material. The filler may be made from a comparatively low density material. The filler may be made from a material with comparatively high flexibility. An example material may be silicone.

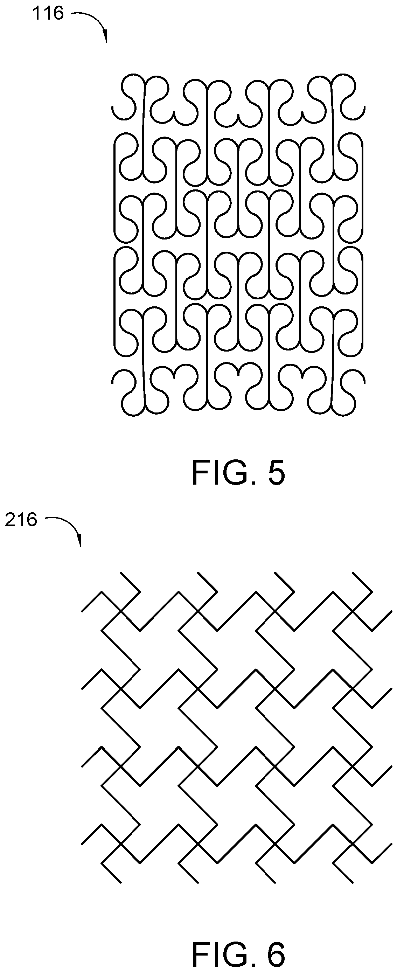

Figures 5 to 9B show various alternative embodiments for auxetic materials that may be used with the present disclosure. They will each be described in turn below. For the avoidance of doubt, any features not mentioned with reference to Figures 5 to 9B are common with the embodiments described above.

Figure 5 shows a stave 116 where the auxetic material is in the form of an S-hinge lattice.

Figure 6 shows a stave 216 where the auxetic material is in the form of a chiral truss lattice.

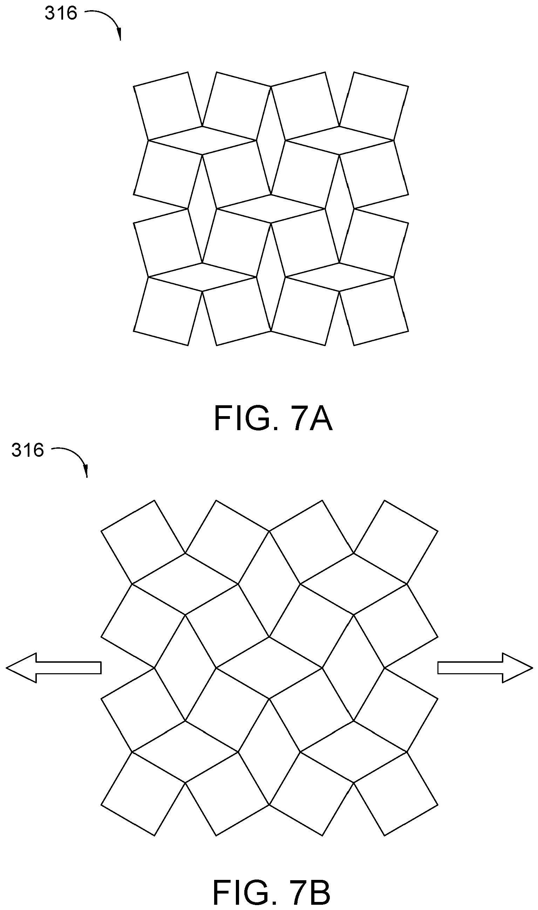

Figure 7A shows a stave 316 where the auxetic material is in the form of a square lattice with no external forces applied. Figure 7B shows a stave 316 where the auxetic material is in the form of a square lattice with lateral forces applied. It can be seen from Figure 7B that by applying lateral force to stretch the stave 316, the lattice expands also in the vertical direction.

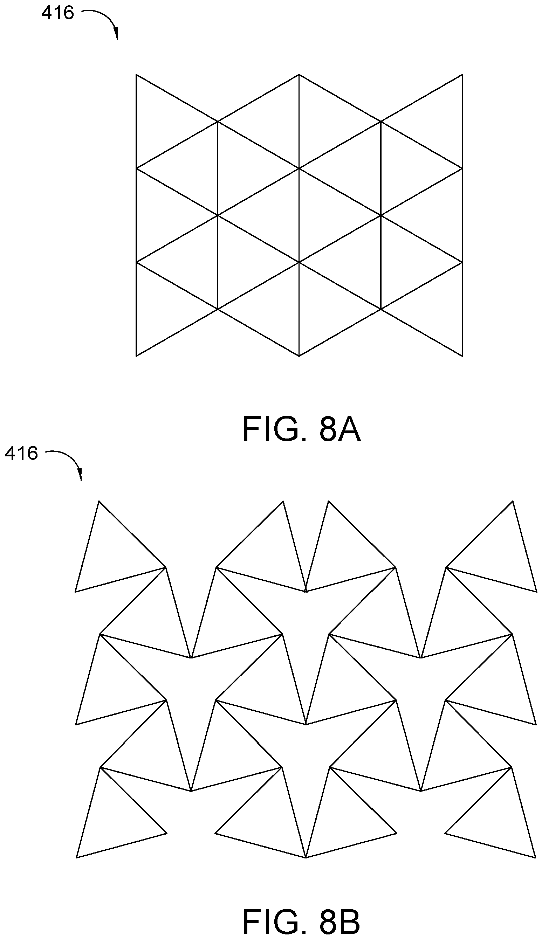

Figure 8A shows a stave 416 where the auxetic material is in the form of a triangular lattice with no external forces applied. Figure 8B shows a stave 416 where the auxetic material is in the form of a triangular lattice with lateral forces applied. It can be seen from Figure 8B that by applying a lateral force to stretch the stave 416, the lattice expands also in the vertical direction.

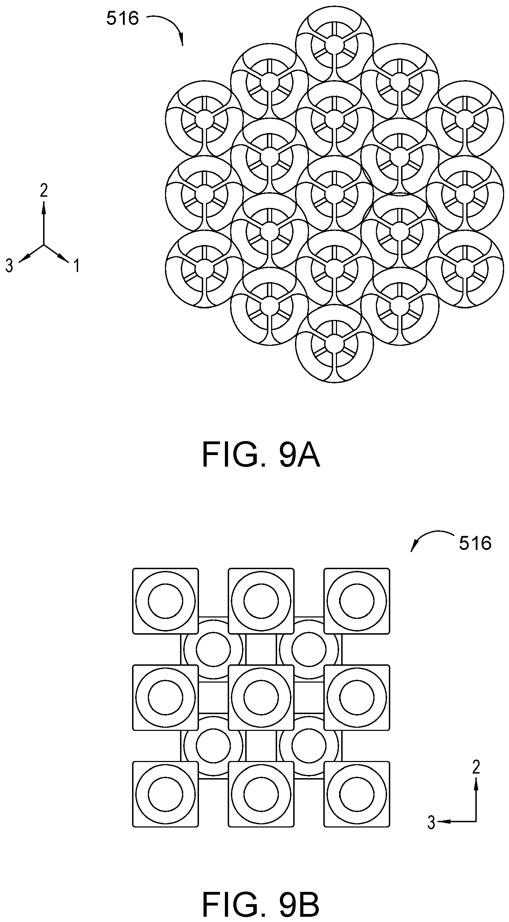

Figure 9A shows a stave 516 where the auxetic material is made using Bucklicrystals and is shown in a perspective view. The Bucklicrystals are shown include 6 holes in this embodiment. However, in other embodiments, there may be a different number of holes. For example, there may be 12 holes per crystal or there may be 24 holes per crystal. Figure 9B shows the Bucklicrystals from Figure 9A from a side view.

There are various ways to manufacture the staves 16 to 516 described above. For instance, the staves may be made by additive manufacturing. In addition, the staves 16 to 516 may be made via laser powder bed fusion using an aluminium alloy. In this case, a base centred cubic structure with single axis reinforcements is preferred. The single axis may be z-axis, such that the material is a base centred cubic structure with z-axis reinforcements, BCCZ.

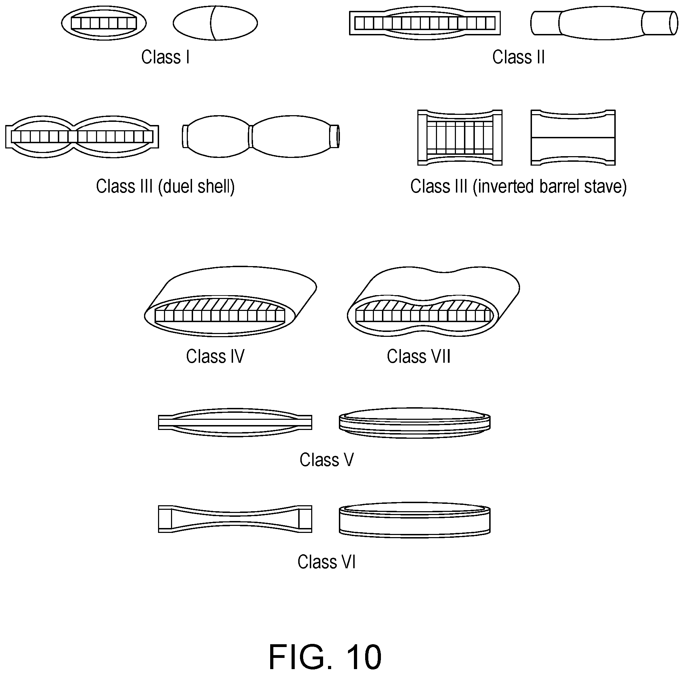

The foregoing embodiments is not an exhaustive set of options for the flextensional transducer. In addition, the flextensional transducer described herein is an inverted barrel type transducer. However, the inventive concepts defined herein may be applied to other flextensional transducer types. Figure 10 shows some other types of flextensional transducer that the inventive concepts may be applied to. As can be seen from Figure 10, the inverted barrel type is Class III. There are seven class (I to VII) shown in Figure 10.

There may be further embodiments not expressly described herein but covered by the appended claims, the scope of the invention being solely defined by the claims.

## Claims

1. A flextensional transducer (10) for use underwater, wherein the flextensional transducer (10) comprises a stave (16) made from a material having a lattice structure, wherein the stave (16) bends inwards towards a centre axis of the flextensional transducer (10) at a central portion of the stave (16), **characterized in that** the material is an auxetic lattice material.

2. The flextensional transducer (10) of claim 1, wherein the auxetic lattice material is an isotropic auxetic lattice material.

3. The flextensional transducer (10) of claim 1, wherein the auxetic lattice material is an anisotropic auxetic lattice material, wherein an intended axis of movement of the stave (16) in-use is configured to have a Poisson's ratio having a highest magnitude compared to the other two axes.

4. The flextensional transducer (10) of claim 3, wherein the auxetic lattice material is an orthotropic auxetic lattice material.

5. The flextensional transducer (10) of claim 4, wherein dimensions of the orthotropic auxetic lattice's structure are different in each Cartesian axis.

6. The flextensional transducer (10) of claim 4, wherein the stave (16) has a non-uniform cross-section.

7. The flextensional transducer (10) of claim 6, wherein the stave (16) has an elliptical cross-section.

8. The flextensional transducer (10) of any preceding claim, wherein the auxetic lattice is constructed using one or more lattice types selected from a list including: S-shape hinges, re-entrant honeycomb, chiral truss, square matrix, triangular matrix, and bucklicrystals.

9. The flextensional transducer (10) of any preceding claim, wherein the stave (16) extends in a first direction and wherein a volume fraction of the stave (16) is graduated along the first direction.

10. The flextensional transducer (10) of claim 9, wherein the volume fraction increases toward a centre of the stave (16), or wherein the volume fraction decreases toward a centre of the stave (16).

11. The flextensional transducer (10) of any preceding claim, wherein the stave (16) is perforated.

12. The flextensional transducer (10) of any preceding claim, wherein the stave (16) is made by additive manufacturing.

13. The flextensional transducer (10) of any of claims 1 to 11, wherein the stave (16) is made by laser powder bed fusion.

14. The flextensional transducer of any preceding claim, further comprising a centre bolt (18) and a ceramic stack (20), wherein the ceramic stack (20) is mounted to the centre bolt (18) and includes a plurality of piezoelectric discs.

15. The flextensional transducer (10) of any preceding claim, for use as a sonar transmitter.

16. The flextensional transducer (10) of any preceding claim, for use as a sonar receiver.

17. The flextensional transducer (10) of any preceding claim, wherein the flextensional transducer (10) is an inverted barrel-type transducer.

18. A water based sonar device comprising the flextensional transducer (10) of any of claims 1 to 17.

**Patentansprüche**

1. Flextensionaler Wandler (10) zur Verwendung unter Wasser, wobei der flextensionale Wandler (10) eine Stange (16) umfasst, die aus einem Material mit einer Gitterstruktur hergestellt ist, wobei die Stange (16) sich nach innen in Richtung einer Mittelachse des flextensionalen Wandlers (10) an einem mittleren Abschnitt der Stange (16) biegt, **dadurch gekennzeichnet, dass** das Material ein auxetisches Gittermaterial ist.

2. Flextensionaler Wandler (10) nach Anspruch 1, wobei das auxetische Gittermaterial ein isotropes auxetisches Gittermaterial ist.

3. Flextensionaler Wandler (10) nach Anspruch 1, wobei das auxetische Gittermaterial ein anisotropes auxetisches Gittermaterial ist, wobei eine beabsichtigte Bewegungsachse der Stange (16) im Gebrauch so konfiguriert ist, dass sie ein Poison-Verhältnis mit dem höchsten Wert im Vergleich zu den beiden anderen Achsen aufweist.

4. Flextensionaler Wandler (10) nach Anspruch 3, wobei das auxetische Gittermaterial ein orthotropes auxetisches Gittermaterial ist.

5. Flextensionaler Wandler (10) nach Anspruch 4, wobei Abmessungen der orthotropen auxetischen Gitterstruktur in jeder kartesischen Achse unterschiedlich sind.

6. Flextensionaler Wandler (10) nach Anspruch 4, wobei die Stange (16) einen nicht gleichförmigen Querschnitt aufweist.

7. Flextensionaler Wandler (10) nach Anspruch 6, wobei die Stange (16) einen elliptischen Querschnitt aufweist.

8. Flextensionaler Wandler (10) nach einem der vorhergehenden Ansprüche, wobei das auxetische Gitter unter Verwendung eines oder mehrerer Gittertypen aufgebaut ist, die aus einer Liste ausgewählt sind, die Folgendes einschließt: S-förmige Scharniere, wiedereintretende Waben, chirale Fachwerke, quadratische Matrix, dreieckige Matrix und Bucklikristalle.

9. Flextensionaler Wandler (10) nach einem der vorhergehenden Ansprüche, wobei sich die Stange (16) in einer ersten Richtung erstreckt und wobei ein Volumenanteil der Stange (16) entlang der ersten Richtung abgestuft ist.

10. Flextensionaler Wandler (10) nach Anspruch 9, wobei der Volumenanteil zum Mittelpunkt der Stange (16) hin zunimmt oder wobei der Volumenanteil zum Mittelpunkt der Stäbe (16) hin abnimmt.

11. Flextensionaler Wandler (10) nach einem der vorhergehenden Ansprüche, wobei die Stange (16) perforiert ist.

12. Flextensionaler Wandler (10) nach einem der vorhergehenden Ansprüche, wobei die Stange (16) durch additive Fertigung hergestellt ist.

13. Flextensionaler Wandler (10) nach einem der Ansprüche 1 bis 11, wobei die Stange (16) durch Laser-Pulverbettschmelzen hergestellt ist.

14. Flextensionaler Wandler nach einem der vorhergehenden Ansprüche, ferner umfassend einen Mittelbolzen (18) und einen Keramikstapel (20), wobei der Keramikstapel (20) an dem Mittelbolzen (18) montiert ist und eine Vielzahl von piezoelektrischen Scheiben einschließt.

15. Flextensionaler Wandler (10) nach einem der vorhergehenden Ansprüche, zur Verwendung als Sonarsender.

16. Flextensionaler Wandler (10) nach einem der vorhergehenden Ansprüche, zur Verwendung als Sonarempfänger.

17. Flextensionaler Wandler (10) nach einem der vorhergehenden Ansprüche, wobei der flextensionale Wandler (10) ein invertierter tonnenförmiger Wandler ist.

18. Sonarvorrichtung auf Wasserbasis, umfassend den flextensionalen Wandler (10) nach einem der Ansprüche 1 bis 17.

**Revendications**

1. Transducteur de flexion-extension (10) pour une utilisation sous-marine, dans lequel le transducteur de flexion-extension (10) comprend une douve (16) constituée d'un matériau ayant une structure en treillis, dans lequel la douve (16) s'incurve vers l'intérieur vers un axe médian du transducteur de flexion-extension (10) au niveau d'une partie centrale de la douve (16), **caractérisé en ce que** le matériau est un matériau en treillis auxétique.

2. Transducteur de flexion-extension (10) selon la revendication 1, dans lequel le matériau en treillis auxétique est un matériau en treillis auxétique isotrope.

3. Transducteur de flexion-extension (10) selon la revendication 1, dans lequel le matériau en treillis auxétique est un matériau en treillis auxétique anisotrope, dans lequel un axe de déplacement prévu de la douve (16), en service, est configuré pour avoir un coefficient de Poisson ayant une ampleur la plus élevée comparée aux deux autres axes.

4. Transducteur de flexion-extension (10) selon la revendication 3, dans lequel le matériau en treillis auxétique est un matériau en treillis auxétique orthotrope.

5. Transducteur de flexion-extension (10) selon la revendication 4, dans lequel des dimensions de la structure en treillis auxétique orthotrope sont différentes dans chaque axe cartésien.

6. Transducteur de flexion-extension (10) selon la revendication 4, dans lequel la douve (16) a une section transversale non uniforme.

7. Transducteur de flexion-extension (10) selon la revendication 6, dans lequel la douve (16) a une section transversale elliptique.

8. Transducteur de flexion-extension (10) selon l'une quelconque des revendications précédentes, dans lequel le treillis auxétique est réalisé en utilisant un ou plusieurs types de treillis sélectionnés parmi une liste incluant des charnières en forme de S, un nid d'abeille ré-entrant, un treillis chiral, une matrice carrée, une matrice triangulaire, et des cristaux « Buckli ».

9. Transducteur de flexion-extension (10) selon l'une quelconque des revendications précédentes, dans lequel la douve (16) s'étend dans une première direction et dans lequel une fraction volumique de la douve (16) est échelonnée le long de la première direction.

10. Transducteur de flexion-extension (10) selon la revendication 9, dans lequel la fraction volumique augmente vers un centre de la douve (16) ou dans lequel la fraction volumique diminue vers un centre de la douve (16).

11. Transducteur de flexion-extension (10) selon l'une quelconque des revendications précédentes, dans lequel la douve (16) est perforée.

12. Transducteur de flexion-extension (10) selon l'une quelconque des revendications précédentes, dans lequel la douve (16) est fabriquée par fabrication additive.

13. Transducteur de flexion-extension (10) selon l'une quelconque des revendications 1 à 11, dans lequel la douve (16) est fabriquée par fusion de lit de poudre par laser.

14. Transducteur de flexion-extension selon l'une quelconque des revendications précédentes, comprenant en outre un boulon central (18) et un empilement céramique (20), dans lequel l'empilement céramique (20) est monté sur le boulon central (18) et inclut une pluralité de disques piézoélectriques.

15. Transducteur de flexion-extension (10) selon l'une quelconque des revendications précédentes, pour une utilisation en tant qu'émetteur de sonar.

16. Transducteur de flexion-extension (10) selon l'une quelconque des revendications précédentes, pour une utilisation en tant que récepteur de sonar.

17. Transducteur de flexion-extension (10) selon l'une quelconque des revendications précédentes, dans lequel le transducteur de flexion-extension (10) est un transducteur de type fût inversé.

18. Dispositif de sonar basé sur l'eau comprenant le transducteur de flexion-extension (10) selon l'une quelconque des revendications 1 à 17.

FIG. 1

FIG. 2

FIG. 3A

FIG. 3B

FIG. 3C

FIG. 4A

FIG. 4B

FIG. 4C

FIG. 5

FIG. 6

316

## FIG. 7A

316

## FIG. 7B

416

FIG. 8A

416

FIG. 8B

FIG. 9A

FIG. 9B

Class I

Class II

Class III (duel shell)

Class III (inverted barrel stave)

Class IV

Class VII

Class V

Class VI

# FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10466353 B

- US 2019013001 A

**Non-patent literature cited in the description**

- **HAMID SAHEBAN et al.** Hydrophones, fundamental features, design considerations, and various structures: A review. *Sensors and Actuators A: Physical*, 2021, vol. 329, 112790